# EUROPEAN PATENT SPECIFICATION

(11) **EP 1 774 877 B1**
(45) Date of publication and mention of the grant of the patent: **03.12.2008**
(21) Application number: 06250327.1
(22) Date of filing: 20.01.2006
(51) Int. Cl.: A47J 27/09

(54) **Pressure cooker**
Dampfkochtopf
Autocuiseur

(30) Priority: 20.01.2005 ES 200500122 U
(43) Date of publication of application: 18.04.2007
(73) Proprietor: CELAYA, EMPARANZA Y GALDOS, INTERNACIONAL, S.A., 01013 Vitoria (Alava) (ES)
(72) Inventor: Gorosarri Barbarias, Angel Maria, 20540 Escoriaza (ES)
(74) Representative: Barlocci, Anna

(56) References cited:
- EP-A- 1 295 552
- DE-A1- 2 343 919
- US-A- 4 545 405
- US-A- 4 560 143

## Description

The present invention relates to a pressure cooker which comprises a container and a lid, the two of which are in use connected together and include handles which are in use superimposed and include safety and opening/closure means.

Pressure cookers of the above-described kind are known, in which the safety and opening/closure means comprise a steam output control device, a push-button for actuation of the steam output control device and a pressure indicator, all of which are fitted in one of the handles of the lid. In addition, the push-button co-operates with the handle of the container, which is situated immediately therebeneath, by means of a lower extension which can be introduced into an opposite recess in the handle of the container when the pressure cooker is closed, thus preventing rotation and opening of the lid when the steam output control device is in the closed position, which, amongst other situations, will correspond to the existence of pressurised steam in the pressure cooker. A pressure cooker of the afore-mentioned kind is described in the applicant's earlier Spanish utility model no 200102805.

Pressure cookers of the afore-mentioned type generally include relatively-complicated mechanisms, and in addition the steam output control device does not permit selection of a number of different positions which correspond to different internal pressures, or to situations of decompression and opening of the pressure cooker.

An aim of the present invention is to provide a pressure cooker of the aforementioned kind, wherein the steam output control device is simple to construct and assemble, with the consequent advantages in terms of cost and functioning.

Another aim of the present invention is to provide a pressure cooker which includes a steam output control device which allows for selection of different internal pressures, as well as the situations of decompression and opening.

A further aim of the present invention is to provide a pressure cooker in which the pressure indicator and the actuating push-button co-operate with the steam output control device, such as to provide for optimal conditions in terms of the operating safety of the pressure cooker.

The pressure cooker of the present invention is of the above-described kind, wherein the steam output control device comprises a rotatable cap for selecting the level of release of the steam, which cap is fitted coaxially in an inverted position in an upper receptacle in the handle, which is preferably integral with the lid, with the possibility of partial rotation and axial displacement, and a steam output shaft which extends through the cap and the upper end of which can be closed by the cap.

In the pressure cooker of the present invention, an annular core is disposed between the cap and the shaft which is prevented from rotating and can be displaced partially in the axial direction relative to the cap. This annular core has a lower profile which engages a stop which projects radially from the inner surface of the wall of the cap and acts to define the height of the cap in the receptacle when the cap is rotated relative to the core.

The steam output control device also includes a compression spring which is preferably fitted between an upper counterbore in the shaft and an inner lower seat in the passage of the core. This spring thrusts the shaft constantly in an outward, upward direction and thrusts the core in the opposite, downward direction, against the radial stop which projects from the inner surface of the wall of the cap.

In a preferred embodiment the lower profile of the wall of the annular core defines four points of engagement for the stop on the cap, these four engagement points being situated consecutively at decreasing distances from the base of the receptacle in the handle when the cap is rotated, in a preferred embodiment clockwise, and will be situated within the cap at consecutively decreasing heights, from a first position of greatest height to a fourth position of lowest height. In the first position of greatest height, the shaft is fully released by the cap and complete decompression of the pressure cooker can occur. In this situation, the inner arm of the push-button faces a recess in the wall of the cap, which permits actuation of the push-button and consequently opening of the lid. When the cap is turned from this first position, the cap passes to a second position in which the shaft is partially released from the stopper, such as to enable progressive decompression, but the wall of the cap prevents actuation of the push-button. When the cap is further turned in the same direction, the cap reaches a third position in which the shaft is blocked and the spring is partially compressed. In this configuration, steam will escape from the pressure cooker only when the pressure in the pressure cooker overcomes the force of the spring. Finally, when the cap is turned further in the same direction, the cap reaches a fourth position in which the shaft is completely blocked and the spring reaches maximum compression, such that steam escapes only when the pressure in the pressure cooker is greater and overcomes the maximum compression force of the spring.

When the cap is turned from the afore-mentioned first to fourth positions, the spring is compressed progressively and there is a reduction in the axial displacement capacity between the cap and the annular core.

In one embodiment the cap includes a recess at a free edge thereof, which, while the cap is turned to a position from the second to the fourth positions as so described, faces the pressure indicator, and this recess has a depth which is sufficient to permit raising of the pressure indicator to its maximum height.

In one embodiment the turning of the cap is limited by a projection which extends radially from the outer surface of the wall, and is located in a recess in the inner surface of the receptacle in the handle of the lid, and can be moved by an angular amplitude which coincides with that of the turning of the cap.

In one embodiment the base of the receptacle in the handle of the lid includes means for supporting the cap and means for preventing rotation of the annular core.

In one embodiment the wall of the cap includes a profile on a lower part thereof which co-operates with the push-button and the pressure indicator in order to permit actuation of the push-button only when the cap is in the position of total decompression and the pressure cooker is open, whilst the lid can be turned to this opening position only when the pressure indicator is in the lower limit position.

All of the characteristics of the present invention, as summarised in the appended claims, are described in greater detail hereinafter with the assistance of the attached drawings, which show a non-limiting embodiment of the invention.

Figure 1 is a lateral elevational view of the lid of a pressure cooker in accordance with a preferred embodiment of the present invention.

Figure 2 is an upper plan view of the lid of Figure 1.

Figure 3 is a partial cross-sectional view of the lid of Figure 1, taken along line III-III in Figure 2.

Figure 4 is a perspective view from above of a handle of the container of the pressure cooker, which in use is situated below the handle of the lid which includes the steam output control device.

Figures 5 and 6 are perspective views from above of the handle of the lid containing the steam output control device, illustrated from opposite angles.

Figure 7 is a perspective view from above of a pressure indicator of the steam output control device.

Figure 8 is a perspective view from above of the actuating push-button of the steam output control device.

Figure 9 is a perspective view from above of the cap part of the steam output control device.

Figure 10 is a perspective view from below of the cap of Figure 9.

Figure 11 is a perspective view from above of the annular core part of the steam output control device.

Figure 12 is a perspective view from below of the annular core of Figure 11.

Figure 13 shows the arrangement of the lower profile of the wall of the annular core of Figures 11 and 12.

Figure 14 shows the arrangement of the lower profile of the wall of the cap of Figures 9 and 10.

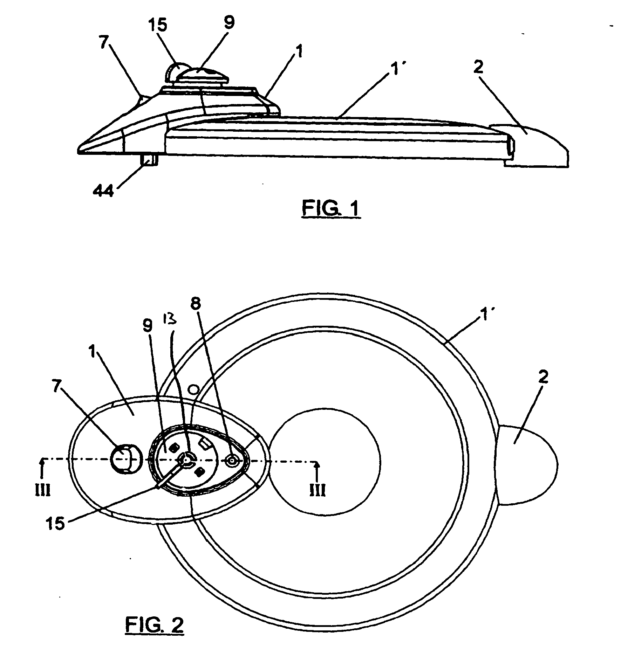

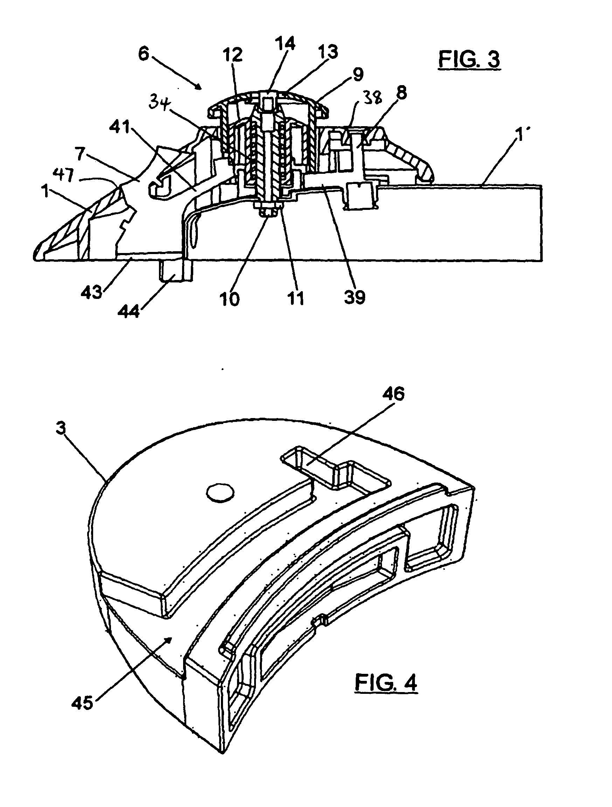

Referring to Figures 1 and 2, the lid 1' of the pressure cooker includes two handles 1, 2 which are situated in diametrically opposite positions. The container of the pressure cooker, which is not illustrated, includes two counterpart handles on which the handles 1, 2 of the lid 1' are in use superimposed. Figure 4 shows in perspective from above the handle 3 of the container, which will be situated immediately below the handle 1 of the lid 1' when the pressure cooker is closed.

Referring to Figures 3, 5 and 6, the handle 1 has a cylindrical upper receptacle 5 in which a steam output control device 6 is located. The handle 1 also includes a push-button 7 for actuating the steam output control device 6 and a pressure indicator 8.

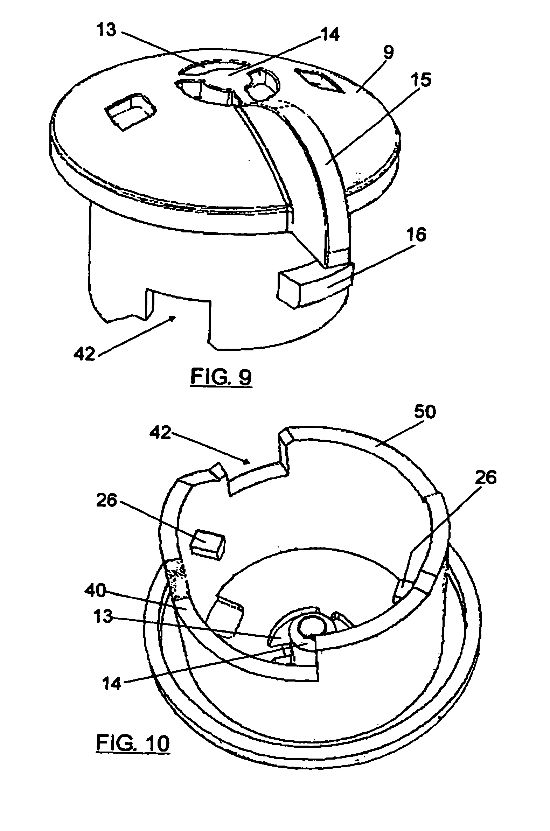

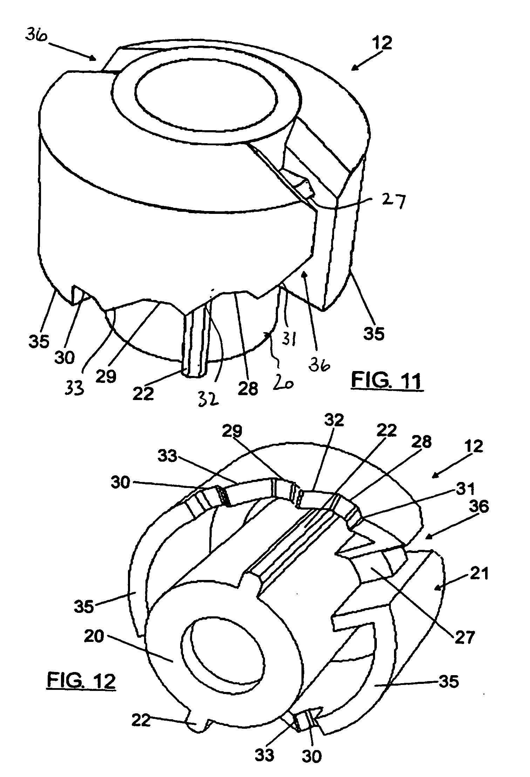

The steam output control device 6 comprises a cap 9, as illustrated in Figures 9 and 10, which defines a housing and is fitted in the receptacle 5 in the handle 1 in an inverted orient with the closed end thereof as the upper end, a central shaft 10 which passes through the lid 1' and is secured to the latter by fastening means 11, in this embodiment a nut, and an annular core 12, as illustrated in Figures 11 and 12, which is disposed axially between the cap 9 and the shaft 10.

The cap 9 includes openings 13 in the upper, closed end thereof, and a central stopper 14 which is integrally formed with the cap 9 and is operative to close the shaft 10.

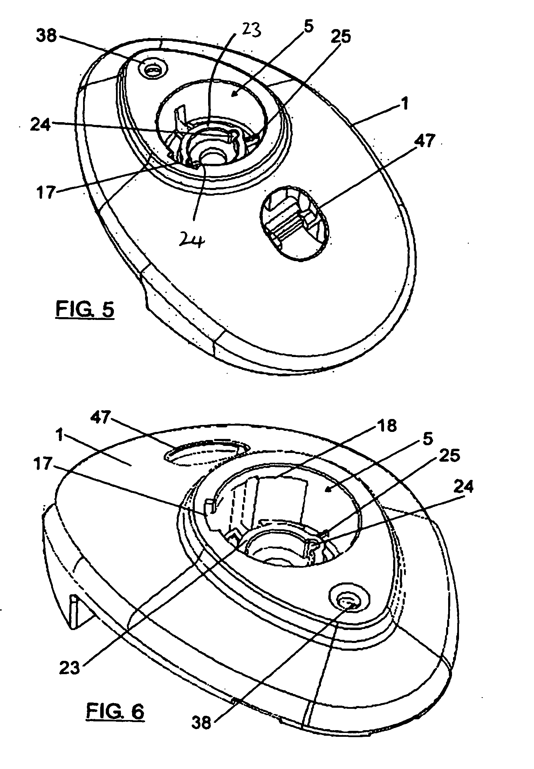

Referring to Figure 9, the cap 9 includes a radial actuating fin 15 at the upper end thereof which is operable by a user, and a projection 16 which extends outwardly, in this embodiment radially, of the annular wall thereof. The projection 16 is inserted through an axial channel 17 in the handle 1, as illustrated in Figures 5 and 6, and is held captive in a peripheral mortise 18 at the inner surface of the receptacle 5, with the angular amplitude of the peripheral mortise 18 acting to limit the angle of rotation of the cap 9.

Referring to Figures 11 and 12, the annular core 12 comprises two coaxial cylindrical walls 20, 21, with one wall 20 being internal and the other wall 21 being external. The inner wall 20 includes two oppositely-directed outer axial ribs 22.

Referring to Figures 5 and 6, the base of the receptacle 5 in the handle 1 includes a cylindrical wall 23 which includes two diametrically-opposed axial channels 24, and the dimension of the cylindrical wall 23 is such as to receive the lower part of the inner wall 20 of the annular core 12, with the outer axial ribs 22 on the inner wall 20 being accommodated in the axial channels 24 in the cylindrical wall 23, such that the annular core 12 is prevented from turning relative to the receptacle 5.

Referring to Figures 5 and 6, the receptacle 5 in the handle 1 includes radial partitions 25 which extend between the inner surface thereof and the cylindrical wall 23, on which the cap 9 is supported by means of the lower, free edge of the wall thereof.

The outer wall 21 of the annular core 12 includes an engagement profile at the lower, free edge thereof, which is engaged by two stops 26 which project inwardly, in this embodiment radially inwardly, at diametrically-opposite positions from the inner surface of the wall of the cap 9. The engagement of the engagement profile on the outer wall 21 of the annular core 12 and the stops 26 on the cap 9 acts to define the height of the cap 9 in the receptacle 5 in the handle 1.

The lower profile of the outer wall 21 of the annular core 12 includes two diametrically-opposed engagement sections which act to engage respective ones of the stops 26 on the cap 9, such as to support the cap 9 at different heights.

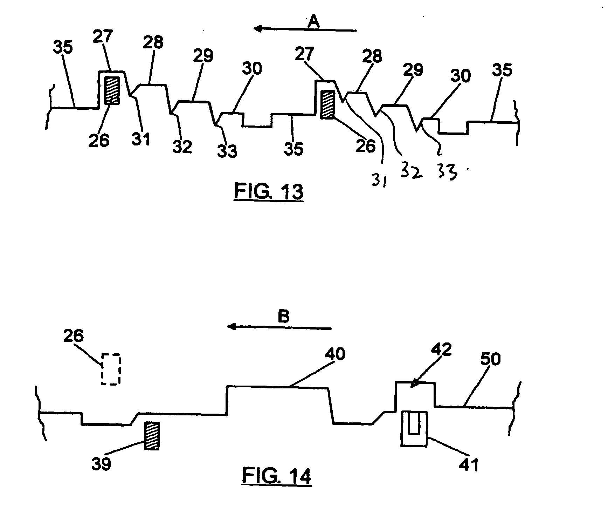

Referring to Figures 11 and 12, each of the engagement sections as defined by the lower profile of the outer wall 21 of the annular core 12 includes four engagement regions 27, 28, 29, 30 which are situated at different heights relative to one another, in this embodiment at progressively decreasing heights, and separated by intermediate ramps 31, 32, 33, as represented in greater detail in Figure 13.

Referring to Figure 3, the steam output control device 6 further includes a compression spring 34 which is disposed between the shaft 10 and the annular core 12, which acts constantly to bias the shaft 10 in an upward direction and the annular core 12 in a downward direction, in order to bias the cap 9 in the same, downward direction through engagement with the stops 26 thereof. In this embodiment the compression spring 34 is disposed between an upper counterbore in the shaft 10 and an inner, lower seat in the annular core 12 which is located about a passage through which the shaft 10 extends.

Referring to Figures 11 and 12, the oppositely-located engagement regions 27, 28, 29, 30 on the outer wall 21 of the annular core 12 are separated by horizontal sections 35, and the outer wall 21 of the annular core 12 also includes two outer axial channels 36, which coincide with the stops 26 on the cap 9 and act as guide means for the axial displacement of the annular core 12.

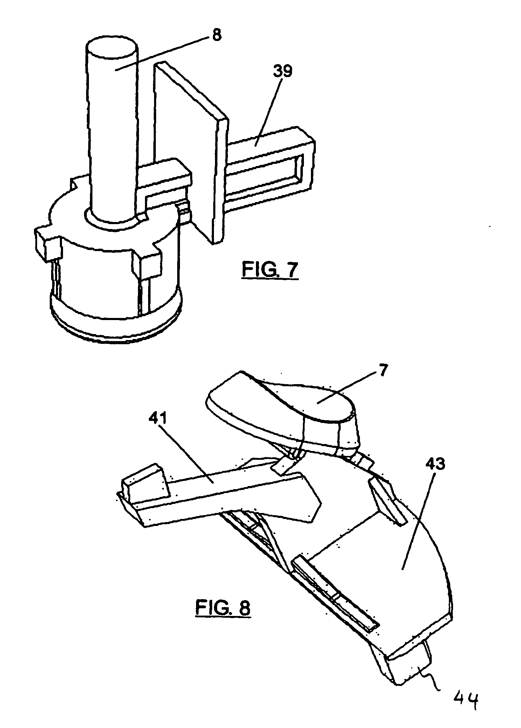

Referring to Figures 3 and 7, the pressure indicator 8 comprises a rod which projects through an aperture 38 in the handle 1 of the lid 1', as illustrated in Figures 3, 5 and 6. The pressure indicator 8 includes a lateral arm 39 as an extension thereof, as illustrated in Figures 3 and 7, which passes through a recess 40 in the lower edge of the wall of the cap 9, as illustrated in Figure 10 and as will be described in more detail hereinafter.

Referring to Figures 3 and 8, the push-button 7 includes a lateral arm 41 which, in its raised position, passes through a recess 42 in a lower edge of the wall of the cap 9, as illustrated in Figures 9 and 10, when the lateral arm 41 is aligned therewith, as will be described in more detail hereinafter.

Referring again to Figures 3 and 8, the push-button 7 includes a plate 43 at a lower end thereof, from the base of which projects a lug 44 which passes into a channel 45 in the counterpart handle 3 of the container during the operation of closing the pressure cooker, and, when the push-button 7 is pushed into the locking position, the lug 44 is located in a rear channel section 46 which is in communication with the channel 45, such as to prevent the lid 1' from rotating relative to the container.

Referring further to Figures 3, 5 and 6, the push-button 7 projects externally via an opening 47 in the handle 1.

Figure 14 represents the profile of the lower edge of the wall of the cap 9, where including the recess 40 for passage of the lateral arm 39 of the pressure indicator 8 and the recess 42 for passage of the lateral arm 41 of the push-button 7, when these recesses 40, 42 are situated above the aforementioned arms 39, 41 in the respective configurations, as will be described in more detail hereinafter.

When the cap 9 is located in the position in Figure 1, the inner radial stops 26 on the wall of the cap 9 coincide with the first engagement regions 27 of the lower profile of the outer wall 21 of the annular core 12, as illustrated in Figure 13. This first configuration is of complete decompression, since the shaft 10 is separated from the stopper 14 of the cap 9. In this configuration, the recess 42 in the wall of the cap 9 is situated above the lateral arm 41 of the push-button 7, such that the push-button 7 can be actuated in order to withdraw the projection or lower lug 44 of the push-button 7, as illustrated in Figures 3 and 8, from the channel section 46 in the handle 3 of the container, as illustrated in Figure 4, into the channel 45, thus allowing the lid 1' to be rotated relative to the container. In this configuration, the pressure cooker can never be pressurised.

If the cap 9 is turned, in this embodiment clockwise, corresponding to direction A in Figure 13, the stops 26 are moved to the second engagement regions 28, in which position the stopper 14 of the cap 9 still does not close the shaft 10, thus allowing for progressive decompression of the pressure cooker. In this configuration, it is not possible to open the pressure cooker, since the recess 42 in the cap 9 is no longer aligned with the lateral arm 41 of the push-button 7. This displacement is represented by arrow B in Figure 14. In this configuration, the lateral arm 39 of the pressure indicator 8 passes through the recess 40 in the cap 9. Once complete decompression has been obtained in the interior of the pressure cooker, the pressure indicator 8 occupies the position in Figure 3, in which position the cap 9 can be turned, in this embodiment anti-clockwise, to the above-described first position, in which the stops 26 are once more situated in the first engagement regions 27.

If the cap 9 is turned further clockwise, starting from the second position referred to above, the stops 26 will reach the third engagement regions 29, in which position the stopper 14 of the cap 9 descends onto the shaft 10, thus closing the shaft 10 and partially compressing the spring 34. In this configuration, a predetermined medium pressure may be obtained in the pressure cooker, the value of which is determined by the force of the spring 34, with the internal pressure acting against the lower edge of the inner wall 20 of the annular core 12 and acting to raise the same and the cap 9 through the engagement with the stops 26, such as to allow for the escape of steam from the container. In this configuration, the pressure indicator 8 will be partially raised, with the lateral arm 39 thereof passing into the adjacent recess 40. In this configuration, the lateral arm 41 of the push-button 7 will be supported on a section 50 of the lower edge of the cap 9, as illustrated in Figure 14, such that, if the push-button 7 is pressed, the cap 9 is raised, causing the stopper 14 to be separated from the shaft 10, thus enabling the escape of steam.

If the cap 9 is still further turned clockwise, starting from the third position as described above, the stops 26 on the cap 9 will be engaged with the fourth engagement regions 30, in which position the cap 9 will have descended as far as possible, and consequently the spring 34 will be compressed as much as possible. This configuration provides for generation of a maximum pressure inside the pressure cooker, and the pressure indicator 8 will be fully extended.

In either of the positions of the cap 9 corresponding to medium or maximum pressure, it is possible to press the push-button 7 in order to raise the cap 9 and cause the discharge of steam until, if required, total decompression is obtained. In either case, in order to open the pressure cooker, the pressure indicator 8 must be in the lower position and the push-button 7 must have been actuated such that the projection or lower lug 44 is located in the channel 45, outside the channel section 46, thus allowing the lid 1' to be rotated relative to the container.

## Claims

1. A pressure cooker which comprises a container, a lid (1') which acts to close the container, wherein the container and the lid include handles (1, 2) which are in use superimposed, a steam output control device (6), a push-button (7) for actuating the steam output control device and a pressure indicator (8), all of which are fitted in a handle (1) of the lid, wherein the steam output control device comprises a cap (9) which includes a stopper (14) and provides for selection of the level of the release of steam as generated within the pressure cooker, which cap is fitted coaxially in an upper receptacle (5) in the handle (1), which preferably is integral with the lid, with the possibility of partial rotation and axial displacement thereof, and a steam output shaft (10) which passes axially through the cap and the upper end of which can be closed by the stopper on the cap;
**characterised by**:
a core (12), preferably an annular core, disposed between the cap (9) and the shaft (10), which is prevented from rotating and can be partially axially displaced relative to the cap, wherein the core has a lower profile which engages at least one stop (26) which projects inwardly, preferably radially inwardly, from an inner surface of the cap, such that the height of the cap within the receptacle (5) in the handle is set by rotating the cap relative to the core;
a resilient element (34), preferably a compression spring, which is located between the shaft and the core, preferably between an upper counterbore in the shaft and an inner lower seat in a passage of the core, which resilient element acts to bias the core in a direction against the at least one stop (26) on the cap;
the lower profile of the wall of the core defining four points of engagement for the at least one stop on the cap which are located at different distances, preferably decreasing distances, from the base of the receptacle in the handle when the cap is rotated, which engagement points are situated on the core at different heights, preferably consecutively decreasing heights, which include a first position of greatest height of the cap in which the shaft is fully released and complete decompression can occur, and an arm (41) of the push-button (7) faces a recess (42) in the wall of the cap in order to permit actuation of the push-button and consequently opening of the lid (1'), a second position in which the shaft is partially released in order to allow progressive decompression, and in which the wall of the cap prevents actuation of the push-button, a third position in which the shaft is blocked and the resilient element is partially compressed, and a fourth position in which the shaft is blocked and the resilient element has a predetermined maximum compression, such that, when the cap is rotated from the first to the fourth position, the resilient element is compressed progressively whilst the rate of axial displacement between the cap and the core is reduced.

2. A pressure cooker according to claim 1, wherein the wall of the cap (9) has a recess (40) which extends from a free edge thereof which, when the cap is rotated from the second to the third position, faces the arm (39) of the pressure indicator (8), this recess having a depth which is sufficient to permit raising of the pressure indicator to its maximum height.

3. A pressure cooker according to claim 1 or 2, wherein the base of the receptacle (5) in the handle (1) of the lid (1') includes a coaxial cylindrical wall (23), around which is located the wall of the cap (9) and into which extends the core (12), the cylindrical wall and the core having inter-engaging axial ribs (22) and channels (24) on opposite surfaces which act to prevent rotation of the core relative to the handle.

4. A pressure cooker according to claim 3, wherein radial lugs (25) are located between the cylindrical wall (23) and the wall of the receptacle (5), on which the free edge of the wall of the cap (9) is supported, this free edge having a profile which assures support of the cap when in the different positions.

5. A pressure cooker according to any of claims 1 to 4, wherein the lower profile of the wall of the core (12) defines two symmetrical groups of four engagement points and the cap (9) includes two inwardly-projecting stops (26) which engage respective ones of the groups of four engagement points.

6. A pressure cooker according to any of claims 1 to 5, wherein the wall of the cap (9) includes an outward projection (16), preferably a radially outward projection, which is accommodated in a recess (18) in the inner surface of the receptacle (5) in the handle (1) of the lid (1'), which recess has an angular amplitude which is approximately the same as that of the set of four engagement points as defined by the wall of the core (12), in order to limit the rotation of the cap to this angular amplitude.

## Patentansprüche

1. Dampfkochtopf, enthaltend: einen Behälter, einen Deckel (1'), der den Behälter verschließt, wobei der Behälter und der Deckel Griffe (1, 2) enthalten, die sich bei Verwendung überlagern, eine Dampfauslass-Steuervorrichtung (6), einen Drucktaster (7) zum Betätigen der Dampfauslass-Steuervorrichtung und eine Anzeigeeinrichtung (8), die allesamt in einen Griff (1) des Deckels eingefügt sind, wobei die Dampfauslass-Steuervorrichtung eine Kappe (9) enthält, die einen Anschlag (14) aufweist und die Wahl des Pegels des Ablassens von Dampf gestattet, der im Dampfkochtopf erzeugt wird, wobei die Kappe koaxial in eine obere Aufnahme (5) im Griff (1) eingefügt ist, der vorzugsweise integraler Bestandteil des Deckels mit der Möglichkeit einer Teildrehung und einer axialen Verschiebung desselben ist, und eine Auslasswelle (10), die axial durch die Kappe verläuft und deren oberes Ende mit dem Anschlag auf der Kappe verschlossen werden kann;
**gekennzeichnet durch**:
einen Kern (12), vorzugsweise einen ringförmigen Kern, der zwischen der Kappe (9) und der Welle (10) angeordnet ist, sich nicht drehen kann und teilweise relativ zur Kappe axial verschoben werden kann, wobei der Kern ein unteres Profil aufweist, das mit wenigstens einem Anschlagstück (26) in Eingriff gelangt, das nach innen, vorzugsweise radial nach innen von einer Innenfläche der Kappe derart hervorsteht, dass die Höhe der Kappe innerhalb der Aufnahme (5) im Griff **durch** Drehen der Kappe relativ zum Kern eingestellt wird;
ein elastisches Element (34), vorzugsweise eine Druckfeder, die sich zwischen der Welle und dem Kern, vorzugsweise zwischen einer oberen Senkbohrung in der Welle und einem inneren unteren Sitz in einem Durchgangsweg des Kerns befindet, wobei sich das elastische Element derart verhält, dass es den Kern in eine Richtung gegen das wenigstens eine Anschlagstück (26) an der Kappe vorspannt; wobei das untere Profil der Wand des Kerns vier Punkte für den Eingriff für das wenigstens eine Anschlagstück an der Kappe definiert, die in unterschiedlichen Abständen, vorzugsweise abnehmenden Abständen, von der Basis der Aufnahme im Griff angeordnet sind, wenn die Kappe gedreht ist, wobei sich die Eingriffspunkte am Kern in unterschiedlichen Höhen, vorzugsweise fortlaufend abnehmenden Höhen, befinden, die eine erste Position größter Höhe der Kappe beinhalten, in der die Welle vollständig gelöst ist und eine vollständige Dekompression erfolgen kann und ein Arm (41) des Drucktasters (7) einer Ausnehmung (42) in der Wand der Kappe zugewandt ist, um eine Betätigung des Drucktasters zuzulassen und demzufolge den Deckel (1') zu öffnen, eine zweite Position, in der die Welle teilweise gelöst ist, um eine allmähliche Dekompression zu gestatten, und in der die Wand der Kappe eine Betätigung des Drucktasters verhindert, eine dritte Position, in der die Welle blockiert und das elastische Element teilweise zusammengedrückt ist, und eine vierte Position, in der die Welle blockiert ist und das elastische Element eine vorbestimmte maximale Kompression hat, so dass, wenn die Kappe von der ersten Position in die vierte Position gedreht wird, das elastische Element allmählich zusammengedrückt wird, während die Rate der axialen Verschiebung zwischen der Kappe und dem Kern verringert wird.

2. Dampfkochtopf nach Anspruch 1, bei dem die Wand der Kappe (9) eine Aussparung (40) hat, die sich von einem freien Rand derselben erstreckt, die, wenn die Kappe von der zweiten in die dritte Position gedreht wird, dem Arm (39) der Druckanzeigeeinrichtung (8) zugewandt ist, wobei dieses Aussparung eine Tiefe hat, die ausreichend ist, um einen Anstieg der Druckanzeigeeinrichtung auf ihre maximale Höhe zu gestatten.

3. Dampfkochtopf nach Anspruch 1 oder 2, bei dem die Basis der Aufnahme (5) im Griff (1) des Deckels (1') eine koaxiale zylindrische Wand (23) enthält, um die die Wand der Kappe (9) angeordnet ist und in die sich der Kern (12) erstreckt, wobei die zylindrische Wand und der Kern ineinandergreifende axiale Stege (22) und Kanäle (24) auf gegenüberliegenden Oberflächen aufweisen, die derart wirken, dass sie eine Drehung des Kerns relativ zum Griff verhindern.

4. Dampfkochtopf nach Anspruch 3, bei dem sich radiale Distanzstücke (25) zwischen der zylindrischen Wand (23) und der Wand der Aufnahme (5) befinden, auf denen der freie Rand der Wand der Kappe (9) ruht, wobei dieser freie Rand ein Profil aufweist, das ein Tragen der Kappe sicherstellt, wenn sich diese in den unterschiedlichen Positionen befindet.

5. Dampfkochtopf nach einem der Ansprüche 1 bis 4, bei dem das untere Profil der Wand des Kerns (12) zwei symmetrische Gruppen von vier Eingriffspunkten definiert und die Kappe (9) zwei nach innen ragende Anschlagstücke (26) enthält, die jeweils in die Gruppen der vier Eingriffspunkte eingreifen.

6. Dampfkochtopf nach einem der Ansprüche 1 bis 5, bei dem die Wand der Kappe (9) einen äußeren Vorsprung (16), vorzugsweise einen radial äußeren Vorsprung, aufweist, der in einer Aussparung (18) in der Innenfläche der Aufnahme (5) im Griff (1) des Deckels (1') aufgenommen ist, wobei die Aussparung eine Winkelweite hat, die etwa dieselbe ist, wie die des Satzes von vier Eingriffspunkten, wie sie durch die Wand des Kerns (12) definiert sind, um die Drehung der Kappe auf diese Winkelweite zu begrenzen.

## Revendications

1. Autocuiseur qui comporte un récipient, un couvercle (1') qui sert à fermer le récipient, le récipient et le couvercle comprenant des poignées (1, 2) qui sont superposées lors de l'utilisation, un dispositif de commande de sortie de vapeur (6), un bouton-poussoir (7) destiné à actionner le dispositif de commande de sortie de vapeur et un indicateur de pression (8), qui sont tous montés dans une poignée (1) du couvercle, le dispositif de commande de sortie de vapeur comportant un bouchon (9) qui comprend une butée (14) et permet la sélection du niveau de libération de vapeur lorsqu'elle est générée dans l'autocuiseur, le bouchon étant monté coaxialement dans un réceptacle supérieur (5) dans la poignée (1), qui est de préférence d'un seul tenant avec le couvercle, avec la possibilité de rotation et de déplacement axial partiels de celui-ci, et un axe de sortie de vapeur (10) qui passe axialement à travers le bouchon et dont l'extrémité supérieure peut être fermée par la butée sur le bouchon ;
**caractérisé par** :
un noyau (12), de préférence un noyau annulaire, disposé entre le bouchon (9) et l'axe (10), qui est empêché de tourner et peut être partiellement déplacé axialement par rapport au bouchon, le noyau ayant un profil inférieur qui engage au moins une butée (26) qui dépasse vers l'intérieur, de préférence radialement vers l'intérieur, depuis une surface intérieure du bouchon, de telle sorte que la hauteur du bouchon à l'intérieur du réceptacle (5) dans la poignée est déterminée en faisant tourner le bouchon par rapport au noyau ;
un élément élastique (34), de préférence un ressort de compression, qui est disposé entre l'axe et le noyau, de préférence entre un contre-alésage supérieur dans l'axe et un siège inférieur intérieur dans un passage du noyau, l'élément élastique agissant afin de rappeler le noyau dans une direction contre la au moins une butée (26) sur le bouchon ;
le profil inférieur de la paroi du noyau définissant quatre points d'engagement pour la au moins une butée sur le bouchon qui sont disposés à différentes distances, de préférence des distances décroissantes, depuis la base du réceptacle dans la poignée quand le bouchon est tourné, les points d'engagement étant situés sur le noyau à différentes hauteurs, de préférence des hauteurs consécutivement décroissantes, qui comprennent une première position de hauteur la plus grande du bouchon dans laquelle l'axe est totalement libéré et une décompression complète peut se produire, et un bras (41) du bouton-poussoir (7) fait face à un renfoncement (42) dans la paroi du bouchon afin de permettre un actionnement du bouton-poussoir et par conséquent l'ouverture du couvercle (1'), une deuxième position dans laquelle l'axe est partiellement libéré afin de permettre une décompression progressive, et dans laquelle la paroi du bouchon empêche l'actionnement du bouton-poussoir, une troisième position dans laquelle l'axe est bloqué et l'élément élastique est partiellement comprimé, et une quatrième position dans laquelle l'axe est bloqué et l'élément élastique a une compression maximum prédéterminée, de telle sorte que, quand le bouchon est tourné depuis la première jusqu'à la quatrième position, l'élément élastique est comprimé progressivement tandis que le taux de déplacement axial entre le bouchon et le noyau est réduit.

2. Autocuiseur selon la revendication 1, dans lequel la paroi du bouchon (9) a un renfoncement (40) qui s'étend depuis un bord libre de celle-ci qui, lorsque le bouchon est tourné depuis la deuxième jusqu'à la troisième position, fait face au bras (39) de l'indicateur de pression (8), ce renfoncement ayant une profondeur qui est suffisante pour permettre d'élever l'indicateur de pression jusqu'à sa hauteur maximum.

3. Autocuiseur selon la revendication 1 ou 2, dans lequel la base du réceptacle (5) dans la poignée (1) du couvercle (1') comprend une paroi cylindrique coaxiale (23), autour de laquelle est disposée la paroi du bouchon (9) et dans laquelle s'étend le noyau (12), la paroi cylindrique et le noyau ayant des nervures axiales (22) et des canaux (24) interengagés sur des surfaces opposées qui agissent afin d'empêcher une rotation du noyau par rapport à la poignée.

4. Autocuiseur selon la revendication 3, dans lequel des pattes radiales (25) sont disposées entre la paroi cylindrique (23) et la paroi du réceptacle (5), sur lesquels le bord libre de la paroi du bouchon (9) est supporté, ce bord libre ayant un profil qui assure un support du bouchon quand il se trouve dans les différentes positions.

5. Autocuiseur selon l'une quelconque des revendications 1 à 4, dans lequel le profil inférieur de la paroi du noyau (12) définit deux groupes symétriques de quatre points d'engagement et le bouchon (9) comprend deux butées dépassant vers l'intérieur (26) qui engagent des groupes respectifs des groupes de quatre points d'engagement.

6. Autocuiseur selon l'une quelconque des revendications 1 à 5, dans lequel la paroi du bouchon (9) comprend une saillie extérieure (16), de préférence une saillie radialement extérieure, qui est reçue dans un renfoncement (18) dans la surface intérieure du réceptacle (5) dans la poignée (1) du couvercle (1'), le renfoncement ayant une amplitude angulaire qui est approximativement la même que celle de l'ensemble de quatre points d'engagement tels que définis par la paroi du noyau (12), afin de limiter la rotation du bouchon à cette amplitude angulaire.
